# EUROPEAN PATENT APPLICATION

(11) **EP 4 838 065 A1**
(43) Date of publication of application: **11.11.2026**
(21) Application number: 26177353.5
(22) Date of filing: 07.05.2026
(51) Int. Cl.: F01D 25/30, F01D 25/24

(54) **EXHAUST SYSTEM WITH CANTILEVERED TURBINE EXHAUST DUCT**

(30) Priority: 07.05.2025 US 202519201302
(71) Applicant: Pratt & Whitney Canada Corp., Longueuil, Québec J4G 1A1 (CA)
(72) Inventor: SYNNOTT, Remy, (01BE5) Longueuil, J4G 1A1 (CA); LEFEBVRE, Guy, (01BE5) Longueuil, J4G 1A1 (CA)
(74) Representative: Dehns

(57) **Abstract**

An exhaust system for an aircraft engine, has: an exhaust case (18D) extending around a central axis (17), the exhaust case (18D) defining exit ports; a turbine exhaust duct (TED) (30) having an inlet conduit (33) extending around the central axis (17) for directing combustion gases in an axial direction, and outlet conduits (34, 35) fluidly communicating with the inlet conduit (33) and extending generally radially outwardly relative to the inlet conduit (33), the outlet conduits (34, 35) communicating with the exit ports; and a fixture (50) interconnecting the **TED** (30) to the exhaust case (18D), the fixture (50) secured to the inlet conduit (33), the **TED** (30) being cantilevered off the fixture (50).

## Description

### TECHNICAL FIELD

The application relates generally to aircraft engines and, more particularly, to exhaust cases of such engines.

### BACKGROUND

Exhaust ducts are disposed downstream of turbine sections and are configured for evacuating combustion gases that have been used to power the turbine sections. These combustion gases are hot and care should be taken to ensure that the exhaust ducts sustain these harsh conditions. Existing exhaust ducts are satisfactory, but improvements are always sought.

### SUMMARY

According to one aspect of the present invention, there is provided an exhaust system for an aircraft engine, comprising: an exhaust case extending around a central axis, the exhaust case defining exit ports; a turbine exhaust duct (TED) having an inlet conduit extending around the central axis for directing combustion gases in an axial direction, and outlet conduits fluidly communicating with the inlet conduit and extending generally radially outwardly relative to the inlet conduit, the outlet conduits communicating with the exit ports; and a fixture interconnecting the TED to the exhaust case, the fixture secured to the inlet conduit, the TED being cantilevered off the fixture.

The TED described above may include any of the following features, in any combinations.

Optionally, and in accordance with the above, the inlet conduit has an inlet end to receive the combustion gases, the fixture connected to the TED at the inlet end.

Optionally, and in accordance with any of the above, the inlet end is defined between an inner wall and an outer wall both extending concentrically around the central axis, the fixture connected to the outer wall, the inner wall being free of connection to surrounding structure.

Optionally, and in accordance with any of the above, gaps extend annularly fully around outlet ends of the outlet conduits.

Optionally, and in accordance with any of the above, exhaust ports are secured to the exhaust case and protruding outwardly away from the exhaust case, portions of the outlet conduits received into the exhaust ports, the exhaust ports having converging sections located downstream of the outlet ends of the outlet conduits relative to a flow of the combustion gases, the converging sections having a cross-sectional areas that decrease along a direction of the flow of the combustion gases.

Optionally, and in accordance with any of the above, the outlet ends of the outlet conduits are radially aligned with duct outlet ends of the converging sections relative to the conduit axes.

Optionally, and in accordance with any of the above, reinforcement rings are mounted to the exhaust case, the reinforcement rings extending around the outlet ends of the outlet conduits.

Optionally, and in accordance with any of the above, the fixture includes a flange having a first end secured to the exhaust case and a second end secured to the turbine exhaust duct, the flange defining one or more elbows between the first end and the second end.

Optionally, and in accordance with any of the above, the flange has a first section extending from the first end to an elbow and a second section extending from the elbow to the second end.

Optionally, and in accordance with any of the above, the fixture includes a flange defining a series of elbows to extend both axially rearwardly and radially inwardly from the exhaust case to the turbine exhaust duct.

According to another aspect of the present invention, there is provided a reverse-flow gas turbine engine, comprising: an outer case assembly extending around a central axis and enclosing a core, the core including a compressor section, a combustor, and a turbine section, the turbine section located forward of the combustor and of the compressor section relative to a direction of travel of the reverse-flow gas turbine engine, the outer case assembly including an exhaust case defining exit ports; a turbine exhaust duct fluidly communicating with the turbine section for receiving combustion gases, the turbine exhaust duct having an inlet conduit extending around the central axis, and outlet conduits communicating with the inlet conduit and extending through the exhaust ports of the exhaust case, the turbine exhaust duct secured to the exhaust case solely via the inlet conduit.

The reverse-flow gas turbine engine described above may include any of the following features, in any combinations.

Optionally, and in accordance with the above, the inlet conduit has an inlet end to receive the combustion gases, the turbine exhaust duct being secured to the exhaust case via a fixture connected to the turbine exhaust duct at the inlet end.

Optionally, and in accordance with any of the above, the inlet end is defined between an inner wall and an outer wall both extending concentrically around the central axis, the fixture connected to the outer wall, the inner wall being free of connection to surrounding structure.

Optionally, and in accordance with any of the above, gaps extend annularly fully around outlet ends of the outlet conduits.

Optionally, and in accordance with any of the above, exhaust ports are secured to the exhaust case and protruding outwardly away from the exhaust case, portions of the outlet conduits received into the exhaust ports, the exhaust ports having converging sections located downstream of the outlet ends of the outlet conduits relative to a flow of the combustion gases, the converging sections having a cross-sectional areas that decrease along a direction of the flow of the combustion gases.

Optionally, and in accordance with any of the above, the outlet ends of the outlet conduits are radially aligned with duct outlet ends of the converging sections relative to the conduit axes.

Optionally, and in accordance with any of the above, reinforcement rings are mounted to the exhaust case, the reinforcement rings extending around the outlet ends of the outlet conduits.

Optionally, and in accordance with any of the above, the turbine exhaust duct is secured to the exhaust case via a fixture, the fixture including a flange having a first end secured to the exhaust case and a second end secured to the turbine exhaust duct, the flange defining one or more elbows between the first end and the second end.

Optionally, and in accordance with any of the above, the flange has a first section extending from the first end to an elbow and a second section extending from the elbow to the second end.

Optionally, and in accordance with any of the above, the turbine exhaust duct is secured to the exhaust case via a fixture, the fixture including a flange defining a series of elbows to extend both axially rearwardly and radially inwardly from the exhaust case to the turbine exhaust duct.

### BRIEF DESCRIPTION OF THE DRAWINGS

Reference is now made to the accompanying figures in which:
Fig. 1 is a schematic cross-sectional view of an aircraft engine depicted as a turboprop gas turbine engine;
Fig. 2 is a three dimensional view of an exhaust system of the aircraft engine of Fig. 1;
Fig. 3 is a cross-sectional view of the exhaust system of Fig. 2;
Fig. 4 is a three dimensional view of a turbine exhaust duct of the exhaust system of Fig. 3;
Fig. 5 is another three dimensional view of the turbine exhaust duct of Fig. 4; and
Fig. 6 is a cross-sectional view of an embodiment of a fixture for interconnecting the turbine exhaust duct to an exhaust case;
Fig. 7 is a cross-sectional view of another embodiment of a fixture for interconnecting the turbine exhaust duct to an exhaust case; and
Fig. 8 is a cross-sectional view of another embodiment of a fixture for interconnecting the turbine exhaust duct to an exhaust case.

### DETAILED DESCRIPTION

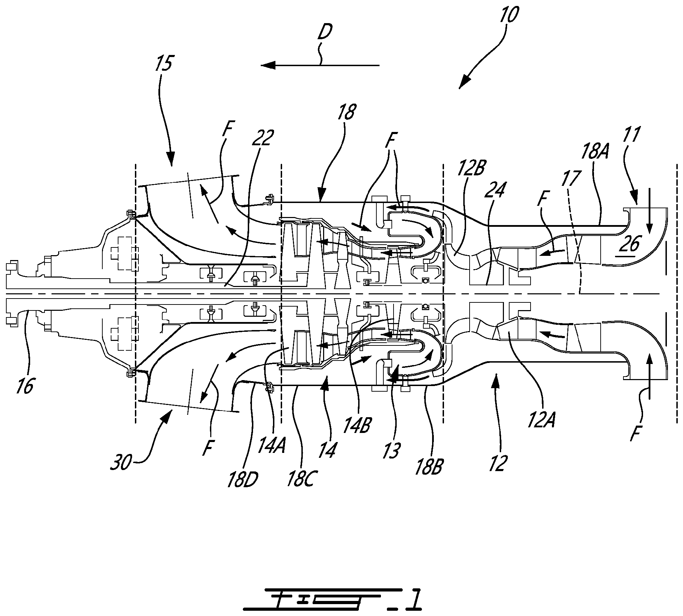

Fig. 1 illustrates an aircraft engine depicted as a gas turbine engine 10 of a type preferably provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, an exhaust system 15 through which the combustion gases exit the gas turbine engine 10. The gas turbine engine 10 has a central axis 17. The gas turbine engine 10 in Fig. 1 is a turboprop engine and includes an output shaft 16, which may drive a propulsor, such as a rotor or propeller, for providing thrust for flight and taxiing. It is understood that the gas turbine engine 10 can adopt various other configurations. For instance, the gas turbine engine could be configured as a turboshaft engine having an output shaft connectable to a rotatable load, such as a helicopter rotor or the like.

The gas turbine engine 10 has an outer case assembly 18 housing a core through which gases flow and which includes most of the turbomachinery of the gas turbine engine 10. The illustrated gas turbine engine 10 is a "reverse-flow" engine 10 because gases flow through the core from the air inlet 11 at a rear or aft portion of the gas turbine engine 10, to the exhaust system 15 at a front portion of the gas turbine engine 10. This is in contrast to "through-flow" gas turbine engines in which gases flow through the core of the gas turbine engine from a front portion to a rear portion. The direction of the flow of gases through the gas turbine engine 10 is shown in Fig. 1 with arrows F.

It will thus be appreciated that the expressions "forward" and "aft" used herein may refer to the relative disposition of components of the gas turbine engine 10, in correspondence to the "forward" and "aft" directions of the gas turbine engine 10 and aircraft including the gas turbine engine 10 as defined with respect to the direction of travel D. In the embodiment shown, a component of the gas turbine engine 10 that is "forward" of another component is arranged within the gas turbine engine 10 such that it is located closer to the output shaft 16. Similarly, a component of the gas turbine engine 10 that is "aft" of another component is arranged within the gas turbine engine 10 such that it is further away from the output shaft 16.

Still referring to Fig. 1, the core of the gas turbine engine 10 may include one or more spools. The illustrated embodiment is a two-spool engine including a low pressure (LP) spool and a high pressure (HP) rotatable about the central axis 17 to perform compression to pressurize the air received through the air inlet 11, and to extract energy from the combustion gases before they exit the core via the exhaust system 15 at a forward end of the core. The core may include other components as well, including, but not limited to internal combustion engines (e.g. rotary engines such as Wankel engines for compounding power with a turbine of the turbine section), gearboxes, tower shafts, and bleed air outlets.

Each spool generally includes at least one component to compress the air that is part of the compressor section 12, and at least one component to extract energy from the combustion gases that is part of the turbine section 14. More particularly, according to the illustrated embodiment, the LP spool has an LP turbine 14A which extracts energy from the combustion gases, and an LP compressor 12A for pressurizing the air. The LP turbine 14A and the LP compressor 12A can each include one or more stages of rotors and stators, depending upon the desired engine thermodynamic cycle, for example. The LP spool further comprises an LP shaft 22 drivingly connecting the LP turbine 14A to the LP compressor 12A. Gears (not shown) can be provided to allow the LP compressor 12A to rotate at a different speed than the LP turbine 14A. The LP turbine 14A may also drivingly connected to the output shaft 16 via a RGB.

Still referring to Fig. 1, the HP spool comprises an HP turbine 14B drivingly engaged (e.g. directly connected) to a HP compressor 12B by a high pressure shaft 24. Similarly to the LP turbine 14A and the LP compressor 12A, the HP turbine 14B and the HP compressor 12B can each include one or more stages of rotors and stators. The LP compressor 12A, the HP compressor 12B, the combustor 13, the HP turbine 14B and the LP turbine 14A are in serial flow communication via a gas path 26 being annular and extending through the core about the central axis 17. The gas path 26 leads to the exhaust system 15 downstream of the turbine section 14.

The outer case assembly 18 includes a plurality of cases disposed along the central axis 17 of the gas turbine engine 10. These cases are secured to one another at mating flanges using suitable fastening means, such as nuts and bolts. Any fastening means are contemplated. The outer case assembly 18 includes a compressor case 18A enclosing the compressor section 12, a combustor case 18B enclosing the combustor 13, a turbine case 18C enclosing the turbine section 14, and an exhaust case 18D being part of the exhaust system 15.

Referring to Figs. 1-3, the exhaust system 15 of the gas turbine engine 10 comprises a turbine exhaust duct (TED) 30 secured to the exhaust case 18D. The exhaust case 18D extends circumferentially around the central axis 17 and defines openings 18E, two openings in this embodiment, sized for receiving portions of the turbine exhaust duct 30 that will be described below. The two openings 18E may be diametrically opposed to one another. More or less than two openings may be used in some embodiments.

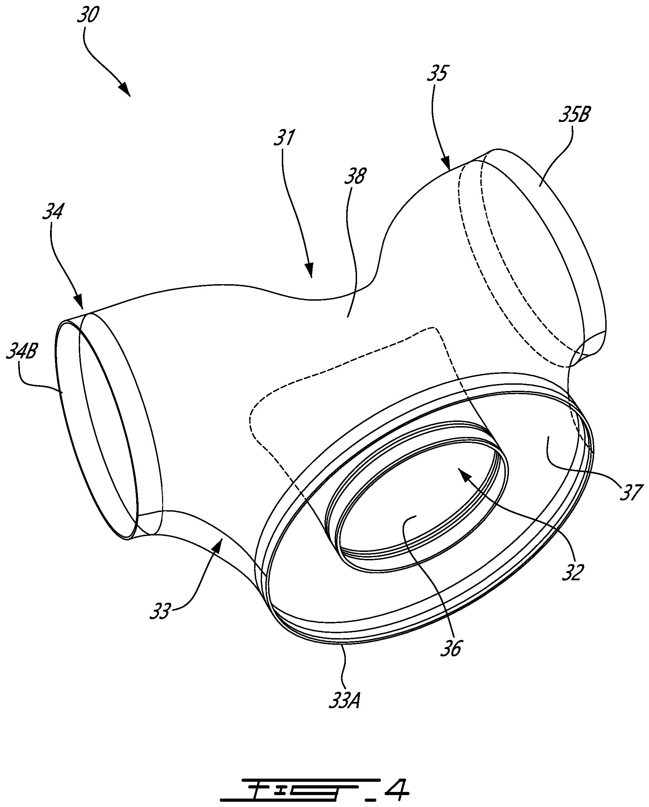

Referring now to Fig. 4, the turbine exhaust duct 30 is described in more detail. The turbine exhaust duct 30 is used for exhausting combustion gases received from the last stage of the LP turbine 14A. According to the illustrated embodiment, the turbine exhaust duct 30 is a non-axisymmetric dual port exhaust duct configured for directing combustion gases laterally on opposed sides of the outer case assembly 18 of the gas turbine engine 10. The turbine exhaust duct 30 is qualified as "non-axisymmetric" because the two exhaust ports thereof are not coaxial to the central axis 17 of the gas turbine engine (i.e., the exhaust flow discharged from the exhaust duct is not axial, it is rather directed in a direction that diverges from the central axis 17). According to at least some embodiments, the TED 30 has a generally "Y-shaped" body 31 including an inlet conduit 33 extending axially around the central axis 17 for receiving the annular flow of combustions gases discharged from the last stage of LP turbine 14A, and first and second outlet conduits 34, 35 branching off laterally from the inlet conduit 33. According to some embodiments, the first and second outlet conduits 34, 35 are identical.

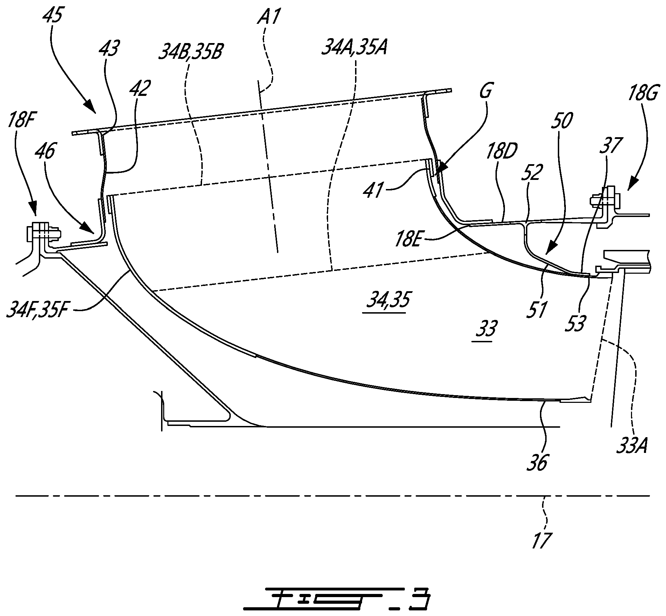

As can be appreciated from Fig. 1, the downstream end of each outlet conduit 34, 35 projects outwardly of the exhaust case 18D. As best shown in Fig. 3, each outlet conduit 34, 35 terminates into an exhaust port. The outlet conduits 34, 35 extend along respective axes that intersect the central axis 17. According to the illustrated embodiment, these axes has a main radial component and a secondary (i.e., smaller) axial component relative to the central axis 17. Stated differently, the exhaust ports of the outlet conduits 34, 35 are oriented to direct the combustion gases mainly in a radially outward direction. According to some embodiments, the exhaust port opening of the outlet conduits 34, 35 are circular. However, it is understood that other geometries are contemplated as well (e.g., oval).

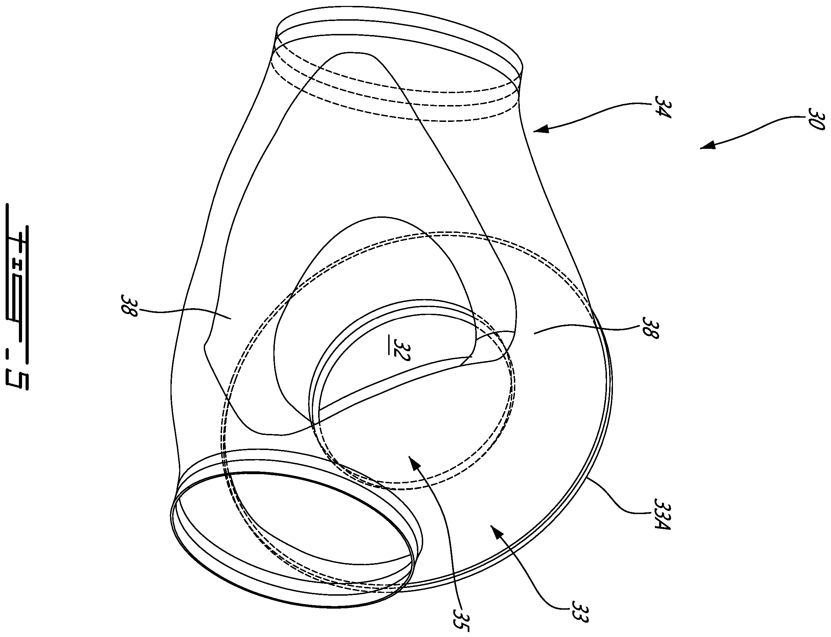

Referring to Figs. 3-5, the Y-shaped body 31 of the turbine exhaust duct 30 defines a fluid flow passage(s) about a central bore 32 for accommodating a shaft engine. The fluid flow passage of the annular body 31 generally includes the inlet conduit 33 through which the bore 32 extends, and in this example the two outlet conduits 34, 35 branching off from the inlet conduit 33 and extending radially away therefrom relative to the central axis 17. It is understood that the inlet and outlet conduits 33, 34, 35 may adopt various configurations. For instance, they can take the form of cylindrically straight or curved conduits. If desired, the body 31 may include more than two outlet conduits. The outlet conduits 34, 35 may not be perpendicularly positioned relative to the inlet conduit 33 (i.e., be purely radially oriented with respect thereto), but rather may extend both radially and axially with respect thereto. Therefore, the body 31 could adopt various configurations including T-shaped and Y-shaped configurations. It is understood that any suitable configurations for the inlet and exhaust conduits may be used.

The inlet conduit 33 includes an inlet end 33A located adjacent the turbine section 14 for receiving combustion gases therefrom. The outlet conduits 34, 35 are generally cylindrical in shape in this example (though any suitable shape may be employed) and have respective outlet centerlines which extend at an angle relative to each other. As shown in Figs. 3 and 4, the outlet conduits 34, 35 have corresponding inlet ends 34A, 35A (Fig. 3) and outlet ends 34B, 35B. The inlet ends 34A, 35A are defined at the intersection between the inlet conduit 33 and the outlet conduits 34, 35, as shown schematically by the dotted lines in Fig. 3.

Referring to Figs. 4-5, the inlet conduit 33 is annular about the central axis 17, which also defines the central axis of the inlet conduit 33. The inlet conduit 33 is defined by an inner peripheral wall 36 and an outer peripheral wall 37. The outer peripheral wall 37 is a circumscribing wall of the inlet conduit 33, and constitutes a periphery of the inlet conduit 33. The inlet conduit 33 may include two circumferentially spaced-apart splitters 38. The splitters 38 may take the form of raises or bumps formed inside the body 31 at a bottom of the inlet conduit 33 and project in a direction toward the central axis 17. The splitters 38 are configured to split the inlet flow in two to direct the two flows towards the outlet conduits 34, 35. The splitters 38 may be omitted in some configurations.

As shown in Figs. 4-5, the outer peripheral wall 37 and the inner peripheral wall 36 are connected to one another at the outlet ends 34B, 35B of the outlet conduits 34, 35. It may therefore be said that the outlet conduits 34, 35 are defined conjointly by the inner peripheral wall 36 and the outer peripheral wall 37. In other words, the inner peripheral wall 36 and the outer peripheral wall 37 are cylindrically shaped at the inlet end 33A of the inlet conduit 33 and their shape diverge from the central axis 17 and merge together to conjointly define the outlet ends 34B, 35B of the outlet conduits 34, 35.

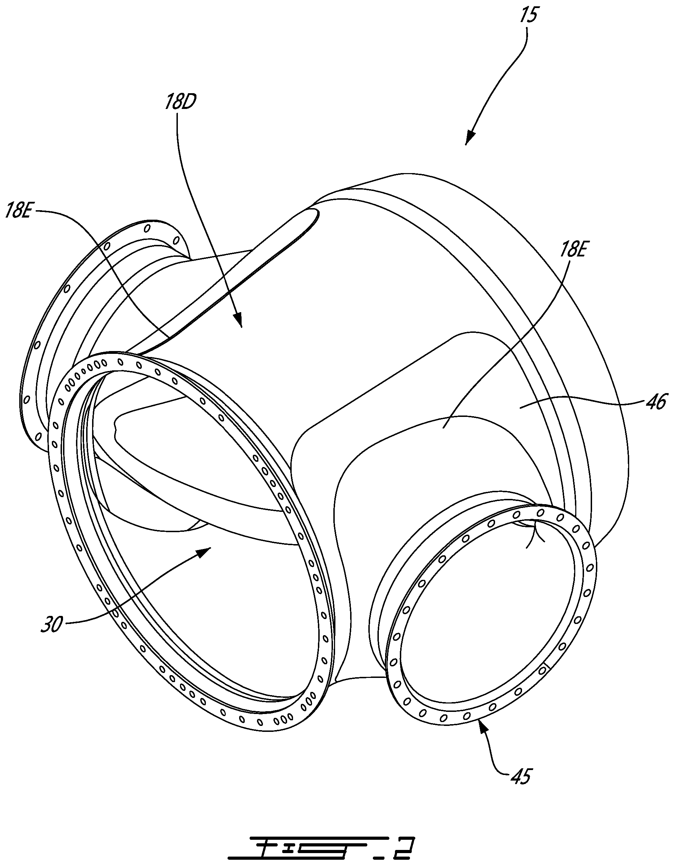

Referring to Figs. 2-3, the exhaust system 15 further includes exhaust ports 45 secured to the exhaust case 18D and being in register with the openings 18E, which are located between forward and rearward ends 18F, 18G of the exhaust case 18D relative to the direction of travel T. The exhaust ports 45 protrude away from the exhaust case 18D in a direction having a radial component relative to the central axis 17. The exhaust ports 45 each extend circumferentially around port axes A1 that are transverse to the central axis 17. As illustrated, the exhaust ports 45 are secured to the exhaust case 18D via fairings 46 that bridge gaps defined between peripheries of the openings 18E and the exhaust ports 45.

It has been observed by inventors of the present disclosure that, at engine start up, the flow of hot combustion gases through the turbine exhaust duct 30 may generate thermal-induced displacement where the turbine exhaust duct 30 is secured to surrounding structure, namely to the exhaust case 18D. These thermal displacement may impair structural integrity and performance of the turbine exhaust duct 30. There is thus a desire to mitigate thermal fights and allow thermal growth of the turbine exhaust case 30.

Referring back to Fig. 3, in the depicted environment, the turbine exhaust duct 30 is secured to the exhaust case 18D solely via the inlet conduit 33. **In** other words, the turbine exhaust duct 30 is cantilevered off a fixture 50 that is used to interconnect the turbine exhaust duct 30 to the exhaust case 18D. As illustrated, the fixture 50 is connected to the turbine exhaust duct 30 at the inlet end 33A of the inlet conduit 33. More specifically, the fixture 50 is connected to the outer peripheral wall 37 and the peripheral inner wall 36 may be free of connection to surrounding structure (e.g., exhaust case 18D).

To enable the turbine exhaust duct 30 to freely expand due to thermal growth, gaps G may be located annularly fully all around the outlet ends 34B, 35B of the outlet conduits 34, 35 of the turbine exhaust duct 30. In other words, the outlet conduits 34, 35 may be free of contact with the exhaust case 18D. This, in turn, may allow thermal growth of the turbine exhaust duct 30 without imparting stress on the exhaust case 18D. To reinforce the outlet ends 34B, 35B of the outlet conduits 34, 35, exhaust rings 41 are mounted to the outlet conduits 34, 35 at or proximate the outlet ends 34B, 35B. The exhaust rings 41 extend all around the outlet ends 34B, 35B of the outlet conduits 34, 35. In some applications, the exhaust rings 41 may also reduce vibrations of the turbine exhaust duct 30.

As shown in Fig. 3, portions of the outlet conduits 34, 35 are received into the exhaust ports 45. The exhaust ports 45 have converging sections 42 located downstream of the outlet ends 34B, 35B of the outlet conduits 34, 35 relative to a flow of the combustion gases. The converging sections 42 have a cross-sectional areas that decrease along a direction of the flow of the combustion gases. The cross-sectional areas are taken on planes being normal to the port axes A1 of the exhaust ports 45. Moreover, the outlet ends 34B, 35B of the outlet conduits 34, 35 may be radially aligned with outlets 43 of the exhaust ports 45 relative to the port axes A1, but axially offset from one another. The radial alignment of the outlet ends 34B, 35B of the outlet conduit 34, 35 with the outlets 43 of the exhaust ports 45, relative to the port axes A1, may minimize pressure drop of the combustion gases when they flow through the outlet conduits 34, 35 and out of the exhaust ports 45. In other words, this radial alignment renders the outlet conduits substantially flush with outlets of the exhaust ports 45. Moreover, the axial offset, relative to the port axes A1, between the outlet ends 34B, 35B of the outlet conduits 34, 35 and the exhaust ports 45 may permit a growth of the outlet conduits 34, 35 due to thermal expansion without contacting the exhaust ports 45.

Still referring to Fig. 3, the fixture 50 is described in more detail. In the depicted environment, the fixture 50 includes a flange 51 that extends inwardly from a first end 52 at the exhaust case 18D to a second end 53 secured to the turbine exhaust duct 30 at or approximate the inlet end 33A of the inlet conduit 33 of the turbine exhaust duct 30. The flange 51 may have a first substantially radial section protruding radially inwardly from the first end 52 and a substantially axial section protruding from an intersection with the radial section and ending at the second end 53, which is secured to the inlet conduit, 33. An elbow or a bend may be defined between the substantially radial section and the substantially axial section. This elbow or bend is configured to act as a hinge to allow the turbine exhaust duct, 30, to move in a radially outward direction due to tail valve movement. Put differently, the flange 51 protrudes transversally and inwardly from the exhaust case 18D and curves towards the inlet end 33A of the inlet conduit 33. The flange 51 may be fully annular and thus may extend all around the central axis 17. In alternate embodiment, the flange 51 may include a plurality of sections circumferentially distributed around the central axis 17 and spaced apart circumferentially from one another.

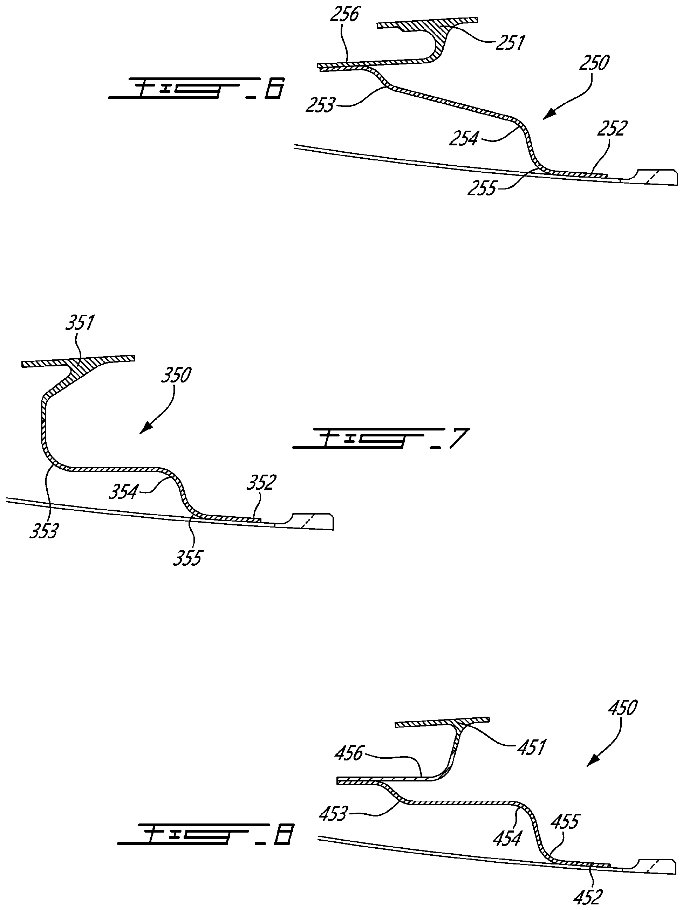

Referring to Fig. 6, another embodiment of a fixture is shown at 250. In this embodiment, the fixture 250 includes a combination of two flange sections. Namely, a first flange section that extends from a first end 251 at the exhaust case 18D in an axially forward direction to an end 256 and then a second flange section extends from the end 256 of the first flange section in an axially rearward direction to a second end 252 at the turbine exhaust case 30. The first flange may define a L-shape, and the second flange extends both axially towards the inlet 33A of the inlet conduit 33 and radially inwardly toward the turbine exhaust duct 30. The second flange defines a series of elbows 253, 254, 255 that act as a hinge or spring to permit the deflection of the turbine exhaust duct 30 relative to the exhaust case 18D.

Referring to Fig. 7, another embodiment of a fixture is shown at 350. In this configuration, the fixture 350 is a flange that extends from a first end 351 at the exhaust case 18D to a second end 352 at the turbine exhaust duct 30. The fixture 350 extends both axially rearwardly, relative to the direction of travel T, and radially toward the central axis 17. The fixture 350 defines a series of elbows 353, 354, and 355 that create a series of steps towards the turbine exhaust duct 30. These elbows permit thermal growth of the turbine exhaust duct 2D relative to the exhaust case 18D.

Referring to Fig. 8, another embodiment of a fixture is shown at 450. This configuration is similar to the one depicted in Fig. 6 in that the fixture 450 includes a first flange section and a second flange section. The first flange section extends from a first end 451 in an axially forward direction relative to the direction of travel T to an end 456. The second flange section extends from the end 456 towards a second end 452 of the fixture 450. The second flange section extends axially rearwardly relative to the direction of travel T and radially inwardly towards the central axis 17. As for the configuration of Fig. 7, the second flange section defines a series of elbows 453, 454, 455 to define a series of steps converging inwardly towards the central axis 17. The shape of the fixture 450 may permit thermal growth of the turbine exhaust duct relative to the exhaust case 18D.

The disclosed configuration thus disassociates the connection between the turbine exhaust duct 30 and the exhaust case 18D at the outlet of the turbine exhaust duct 30 to allow thermal displacement. The turbine exhaust duct 30 is secured to the exhaust case 18D near or at an inlet end of the inlet conduit 33 where temperature distribution is expected to be more uniform and less subjected to gradients. This may allow the turbine exhaust duct 30 to move axially and radially with limited thermal stress and may allow the turbine exhaust duct 30 to deform in response to pressure variations from thrust generated by the gas turbine engine 10. The disclosed configuration including the fixture may increase the service life of the turbine exhaust duct 30 and exhaust case 18D by about 15 times.

In the context of the present disclosure, the expressions "substantially" as in "substantially radial" implies that a main component of the direction is radial even if the direction may have one or both of an axial and circumferential component. In other words, by being "substantially radial", the radial component of the direction is greater than the axial component.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. An exhaust system (15) for an aircraft engine (10), comprising:
an exhaust case (18D) extending around a central axis (17), the exhaust case (18D) defining exit ports;
a turbine exhaust duct (TED) (30) having an inlet conduit (33) extending around the central axis (17) for directing combustion gases in an axial direction, and outlet conduits (34, 35) fluidly communicating with the inlet conduit (33) and extending generally radially outwardly relative to the inlet conduit (33), the outlet conduits (34, 35) communicating with the exit ports; and
a fixture (50) interconnecting the TED (30) to the exhaust case (18D), the fixture (50) secured to the inlet conduit (33), and the TED (30) being cantilevered off the fixture (50).

2. The exhaust system (15) of claim 1, wherein the inlet conduit (33) has an inlet end (33A) to receive the combustion gases, the fixture (50) connected to the TED (30) at the inlet end (33A).

3. The exhaust system (15) of claim 2, wherein the inlet end (33A) is defined between an inner wall (36) and an outer wall (37) both extending concentrically around the central axis (17), wherein the fixture (50) connected to the outer wall (37), the inner wall (36) being free of connection to surrounding structure.

4. The exhaust system (15) of any preceding claim, comprising gaps (G) extending annularly fully around outlet ends (34B, 35B) of the outlet conduits (34, 35).

5. The exhaust system (15) of claim 4, comprising exhaust ports (45) secured to the exhaust case (18D) and protruding outwardly away from the exhaust case (45), wherein portions of the outlet conduits (34, 35) are received into the exhaust ports (45), the exhaust ports (45) having converging sections (42) located downstream of the outlet ends (34B, 35B) of the outlet conduits (34, 35) relative to a flow of the combustion gases, and the converging sections (42) having cross-sectional areas that decrease along a direction of the flow of the combustion gases.

6. The exhaust system (15) of claim 5, wherein the outlet ends (34B, 35B) of the outlet conduits (34, 35) are radially aligned with duct outlet ends (43) of the converging sections (42) relative to conduit axes.

7. The exhaust system (15) of any preceding claim, comprising reinforcement rings (41) mounted to the exhaust case (18D), the reinforcement rings (41) extending around the outlet ends (34B, 35B) of the outlet conduits (34, 35).

8. The exhaust system (15) of any preceding claim, wherein the fixture (50) includes a flange (51) having a first end (52) secured to the exhaust case (18D) and a second end (53) secured to the TED (30), the flange (51) defining one or more elbows between the first end (52) and the second end (53).

9. The exhaust system (15) of claim 8, wherein the flange has a first section extending from the first end (251, 451)to an elbow (253, 254, 255, 256, 453, 454, 455, 456) and a second section extending from the elbow (253 ... 256, 453 ... 456) to the second end (252, 452).

10. The exhaust system (15) of any preceding claim, wherein the fixture (350) includes a flange defining a series of elbows (353, 354, 355) to extend both axially rearwardly and radially inwardly from the exhaust case (18D) to the TED (30).

11. A reverse-flow gas turbine engine (10) of an aircraft, comprising:
a core including a compressor section (12), a combustor (13), and a turbine section (14), the turbine section (14) located forward of the combustor (13) and of the compressor section (12) relative to a direction of travel (D) of the aircraft; and
the exhaust system (15) of any preceding claim.
